(19) Europäisches Patentamt
European Patent Office
Office européen des brevets

(11) EP 0 687 702 B1

(12) # EUROPÄISCHE PATENTSCHRIFT

(45) Veröffentlichungstag und Bekanntmachung des Hinweises auf die Patenterteilung:
**08.08.2001 Patentblatt 2001/32**

(51) Int Cl.[7]: **C08J 5/18**, C08L 23/12, B32B 27/32

(21) Anmeldenummer: **95107050.7**

(22) Anmeldetag: **10.05.1995**

(54) **Biaxial hochorientierte Polypropylenfolie und Verfahren zu ihrer Herstellung**

Biaxially highly oriented polypropylene film and process for its preparation

Film de polypropylène hautement orienté biaxiallement et procédé de sa préparation

(84) Benannte Vertragsstaaten:
**BE DE ES FR GB IT NL**

(30) Priorität: **16.05.1994 DE 4417118**

(43) Veröffentlichungstag der Anmeldung:
**20.12.1995 Patentblatt 1995/51**

(73) Patentinhaber: **Trespaphan GmbH**
**66539 Neunkirchen (DE)**

(72) Erfinder:
- **Peiffer, Herbert**
  **D-55126 Mainz (DE)**
- **Murschall, Ursula**
  **D-55283 Nierstein (DE)**
- **Busch, Detlef**
  **D-66740 Saarlouis (DE)**
- **Lohmann, Harald**
  **D-66539 Neunkirchen (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
**EP-A- 0 195 505**
**EP-A- 0 317 276**
**EP-A- 0 348 749**
**EP-A- 0 406 642**
**EP-A- 0 468 333**
**EP-A- 0 479 101**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 687 702 B1

Printed by Jouve, 75001 PARIS (FR)

## Beschreibung

Die Erfindung betrifft eine Polypropylenfolie mit verbessertem Eigenschaftsbild bezüglich Mechanik, Optik, Reibung und Barriere gegenüber Wasserdampf und Sauerstoff. Die Erfindung betrifft daneben ein Verfahren zur Herstellung der Folie und ihre Verwendung.

Die Verbesserung der mechanischen Eigenschaften von Folien, insbesondere von Folien für den Verpakkungssektor, hat in letzter Zeit an Bedeutung zugenommen. Aus Kosten- und aus Umweltgründen wünscht die Verpackungsindustrie immer dünnere Folien bei gleichbleibender bzw. verbesserter Maschinengängigkeit und gleichbleibenden bzw. verbesserten Barriereeigenschaften, insbesondere hinsichtlich Durchtritt von Wasserdampf und Sauerstoff. Daneben sollen die Folien sehr gute optische Eigenschaften haben und aus lebensmittelrechtlichen Gründen möglichst wenig an migrierenden Additiven aufweisen.

Dünnere Folien haben infolge ihrer schlechteren mechanischen Eigenschaften (insbesondere Steifigkeit) ein wesentlich schlechteres Maschinenlaufverhalten, insbesondere auf den heutigen schnellaufenden Einschlagsmaschinen. Daneben verringern sich mit der Reduzierung der Foliendicke die Barriereeigenschaften ebenfalls überproportional. Infolge der schlechteren Barriereeigenschaften dünner Folien wird die Schutzwirkung der Folie gegenüber Verderben des Füllgutes stark eingeschränkt.

Die Verbesserung der mechanischen Eigenschaften ist seit jeher Gegenstand intensiver Bemühungen, weil diese in unmittelbarem Zusammenhang mit der anwendungstechnischen Eignung steht und somit das Verarbeitungsverhalten direkt bestimmt.

Wie in den Produkt-Übersichten der Firmen Mobil Plastics Europe und Hoechst AG dargestellt liegt beispielsweise der Zug-E-Modul (DIN 53 457, ASTM 882) von üblichen boPP-Folien in Längs- und in Querrichtung unabhängig von der Dicke zwischen 2 000 und 2 200 N/mm$^2$ bzw. zwischen 3 500 und 4 200 N/mm$^2$. Die Reißfestigkeit (DIN 53 455 bzw. ASTM-D 882) ist ebenfalls unabhängig von der Dicke und liegt in Längsrichtung zwischen 130 und 155 N/mm$^2$ und in Querrrichtung zwischen 250 und 300 N/mm$^2$.

Die Barriere von boPP-Folien hinsichtlich Wasserdampf (WDD) und Sauerstoff (SDD) nimmt mit der Foliendicke ab. Im üblichen Dickenbereich von boPP-Folien (4 bis 100 µm) besteht z. B. zwischen der Wasserdampfbarriere (WDD) und der Dicke (d) näherungsweise ein hyperbolischer Zusammenhang (WDD · d = const.). Die Konstante hängt im wesentlichen von der Rohstoffzusammensetzung und den Verfahrensparametern ab. Für boPP-Verpackungsfolien nach dem Stand der Technik hat die Konstante einen Wert von etwa: const. = 28 g·µm/m$^2$·d. Die Wasserdampfdurchlässigkeit wurde hierbei nach DIN 53 122 gemessen. Aus den genannten Produkt-Übersichten geht hervor, daß beispielsweise die Wasserdampfdurchlässigkeit einer 25 µm dicken boPP-Folie bei 1,1 g/m$^2$·d liegt.

Weiterhin ist es nach wie vor Kundenwunsch, die optischen Eigenschaften (Glanz, Trübung) zu verbessern. Für bestimmte Anwendungen ist es daneben erforderlich, die Reibung der Folien zu verringern oder den Anteil an Gleitmittel - bei gleichbleibender Reibung - abzusenken.

Es ist bekannt, bei boPP-Folien die mechanischen Eigenschaften entweder über die Verfahrenstechnik oder über Rohstoffmodifikationen oder die Kombination beider Möglichkeiten zu erhöhen.

Eine Möglichkeit zur Herstellung von hochfesten Polypropylenfolien ist ein drei- oder mehrstufiges Streckverfahren, wie es beispielsweise in der EP-B-0 116 457 beschrieben ist. Ein solches Herstellverfahren hat jedoch den Nachteil, daß es eine zusätzliche Vorrichtung zur Nachlängsstreckung benötigt und dadurch sehr aufwendig ist. Darüber hinaus ist es gegen Störungen im Produktionsablauf, z. B. Folienabrisse, sehr anfällig.

Ferner weisen solche nachlängsgestreckten Folien einen gegenüber lediglich biaxial verstreckten Folien deutlich erhöhten Längsschrumpf auf, der es in der Regel verhindert, daß die Folien eine thermische Trocknung, wie sie z. B. nach dem Aufbringen von Klebermassen zum Teil noch üblich ist, ohne unerwünschte Schrumpffalten überstehen.

Die Modifizierung der für die Herstellung von Polypropylenfolien verwendeten Rohstoffe mit verschiedenen Kohlenwasserstoffharzen ist beispielsweise in der US-A-3,937,762 beschrieben. Eine solche Rohstoffmodifizierung ermöglicht die Herstellung von Polypropylenfolien, deren Siegelfähigkeit gegenüber Folien aus unmodifizierten Rohstoffen deutlich verbessert ist. Nach den Angaben in den Beispielen wird die Folie 6,2:1 in eine Richtung und anschließend 4:1 in die andere Richtung gestreckt.

In der EP-A-0 406 642 wird eine boPP-Folie mit hoher mechanischer Festigkeit beschrieben. Die hohen Festigkeitswerte in Längsrichtung werden dadurch erreicht, daß die Basisschicht 5 bis 30 Gew.-% eines Kohlenwasserstoffharzes und 0,01 bis 1,0 Gew.-% eines Nukleierungsmittels enthält. Das Produkt aus den Streckverhältnissen in Längs- und in Querrichtung beträgt mindestens 40 und höchstens 72. Über Barriereeigenschaften, optische Eigenschaften und das Reibungsverhalten wird in dieser Schrift keine Ausage gemacht. In den Beispielen wird eine Harzkonzentration von 20 Gew.-% angegeben.

Derartig hohe Harzkonzentrationen führen zu Problemen bei der Folienherstellung. Insbesondere treten nach kurzer Zeit Ablagerungen an der Schnecke des Plastifizierextruders und an den Walzen der Längsstreckung auf. Daneben führt die Zugabe von Nukleierungsmittel in der angegebenen Konzentration zu optischen Foliendefekten in Form von sogenannten "Stippen" und "Blasen", die natürlich äu ers t unerwünscht sind. Au erdem ist das Regenerat

derartiger Folien aufgrund von Agglomeratneigung im Folienherstellproze nicht mehr einsetzbar. Weiterhin sind die in den Beispielen 3 bis 6 der EP-A-0 406 642 angegebenen Streckverhältnisse auf keiner Produktionsmaschine bei den üblichen Geschwindigkeiten mit dem dort beschriebenen Homopolymer zu realisieren. Es treten ständig Folienabrisse, insbesondere in der Querstreckung auf.

In der EP-A-0 348 749 wird eine Schrumpffolie beschrieben, die aus wenigstens einer polyolefinischen Schicht besteht und Polypropylen und einen Harzzusatz enthält. Diese Folie besitzt ein Schrumpfvermögen in Querrichtung von mehr als 20 % bei 90 °C und in Längsrichtung von weniger als 8 % ebenfalls bei 90 °C. Sie wird durch Längs- und Querstreckung hergestellt, wobei die Längsstreckung so durchgeführt wird, daß der Wert der Doppelbrechung der längsgestreckten Folie, $\Delta$ n, den Bereich 10 bis 13 x $10^{-3}$ nicht übersteigt. Diese Folie wird in der sog. "sleeves"-Anwendung, d. h. als Rundum-etiketten für zylindrische Hohlkörper wie Flaschen und Dosen eingesetzt. Die mechanischen Eigenschaften bezüglich der Reißfestigkeit in Längsrichtung sind im Bereich von 145 bis 185 $N/mm^2$ und in Querrichtung von 235 bis 290 $N/mm^2$ und damit verbesserungswürdig.

Hervorragende mechanische Eigenschaften lassen sich durch die Kombination eines Harzzusatzes zum eingesetzten Rohstoff mit einem Nachlängsstreckproze erzielen. Eine entsprechende Vorgehensweise ist in der EP-A-0 079 520 beschrieben, wo sehr hohe Festigkeitswerte in Längsrichtung erreicht werden. Allerdings hat auch dieses Verfahren den Nachteil, da ein aufwendiges und störanfälliges Nachlängsstreckverfahren erforderlich ist.

In der US-A-4,921,749 (= EP-A-0 247 898) wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140 C. Die Folie wird biaxial orientiert. In den Beispielen ist ein Längsstreckverhältnis von 5:1 und ein Querstreckverhältnis von 9:1 angegeben. Das Gesamtflächenstreckverhältnis liegt demnach bei 45.

In der EP-A-0 468 333 wird eine siegelfähige Folie mit verbesserten Barriereeigenschaften hinsichtlich Durchtritt von Wasserdampf und Sauerstoff bei gleichzeitig guten Gleiteigenschaften und niedrigen Schrumpfwerten beschrieben. Die kennzeichnenden Merkmale dieser boPP-Folie sind darin zu sehen, daß sie aus einer Basisschicht aufgebaut ist, welche aus einem Polypropylen und einem Kohlenwasserstoffharz mit einem Erweichungspunkt von größer 140 °C besteht, und daß sie wenigstens eine siegelfähige Deckschicht aufweist, die gegebenenfalls zusätzlich ein Kohlenwasserstoffharz enthält. Die Basisschicht und die Deckschicht enthalten mindestens ein Antiblockmittel und/oder ein Gleitmittel. Diese Folie wird in einem Bereich von 4:1 bis 6:1 längs- und größer 7,5:1 quergestreckt. Über den Einfluß des Gesamtflächenstreckverhältnisses auf Folieneigenschaften werden keine Angaben gemacht.

In der US-A-4,921,749 und in der EP-A-0 468 333 werden hohe Konzentrationen an Kohlenwasserstoffharz eingesetzt, um die Barriereeigenschaften zu erhöhen. Derartig hohe Harzgehalte führen zu Problemen bei der Folienherstellung. Insbesondere treten nach kurzer Zeit Harzablagerungen an der Schnecke des Extruders und an den Längsstreckwalzen auf. Infolge der hohen Harzgehalte zeigen die Folien hohe Warmblockwerte und weisen eine störende Blockneigung bei der Weiterverarbeitung auf.

Die EP-B-0 115 940 beschreibt ein hochisotaktisches Propylen-Ethylen-Copolymer mit einem Ethylengehalt von 0,1 bis 2 Mol-% und einer Isotaktizität von größer ca. 94 %, wobei sich diese Untergrenze in Abhängigkeit vom Ethylengehalt nach oben verschiebt. Der Ethylengehalt verbessert die Streckbarkeit, die Schlagfestigkeit und die Transparenz sowie die Schrumpfbeständigkeit von Folien aus solchen Copolymeren. Diese Folien werden im Bereich von 3,5 bis 7 längsgestreckt und im Bereich von 7 bis 12 quergestreckt. Der hochisotaktische Basisrohstoff gewährleistet hohe mechanische Festigkeiten in Längs- und Querrichtung in Verbindung mit anderen günstigen Folieneigenschaften. In den Beispielen beträgt das Gesamtflächenstreckverhältnis 50.

US-A-4,355,144 beschreibt ebenfalls Propylencopolymere mit niedrigem Ethylengehalt, welche gegenüber reinen Propylenhomopolymeren besser verstreckbar sind. Der Ethylengehalt liegt in einem Bereich von 0,15 bis 1,5 Mol-%. Folien aus den Copolymeren werden in einem Bereich von 3- bis 10fach längs- und 3- bis 10fach quergestreckt. In den Beispielen beträgt das maximale Flächenstreckverhältnis 49. Die erzielten mechanischen Festigkeiten sind jedoch stark verbesserungsbedürftig, insbesondere die angegebenen E-Moduli in Längsrichtung sind nach den heutigen Qualitätsanforderungen nicht mehr akzeptabel.

Die Aufgabe der vorliegenden Erfindung bestand darin, eine biaxial orientierte Polypropylenfolie zur Verfügung zu stellen, die sich durch hohe Festigkeitswerte und erhöhte Barriereeigenschaften hinsichtlich Durchtritt von Wasserdampf und Sauerstoff auszeichnet. Die Folie soll einen hohen Glanz, keine optischen Defekte in Form von Stippen oder Blasen, eine gute Kratzfestigkeit, auch bei einer niedrigen Foliendicke einen störungsfreien Lauf auf schnellaufenden Verpakkungsmaschinen und eine niedrige Folientrübung aufweisen. Die Nachteile des Nachlängsstreckprozesses wie technische Umbauten an der Produktionsmaschine, Störungen durch häufige Folienabrisse und hoher Restschrumpf der boPP-Folien sollen vermieden werden. Weiterhin muß gewährleistet sein, daß das Regenerat in einer Konzentration von 20 bis 50 Gew.-%, bezogen auf das Gesamtgewicht der Folie, wieder zugeführt werden kann. Die Folie muß lauf- und verfahrenssicher bei Produktionsgeschwindigkeiten von bis zu 400 m/min herstellbar

sein. Andere physikalische Folieneigenschaften, die im Hinblick auf deren Verwendung als Verpackungsfolie und/oder als Kaschierfolie gefordert sind (Warmblockverhalten, Reibungsverhalten), dürfen nicht nachteilig beeinflußt werden.

Diese Aufgabe wird durch eine biaxial orientierte Polypropylenfolie gelöst, deren kennzeichnende Merkmale darin bestehen, daß der n-heptanunlösliche Anteil der Folie einen Kettenisotaxie-Index, gemessen mittels $^{13}C$-NMR-Spektroskopie, von mindestens 85 bis 94 % aufweist, daß die Basisschicht Propylenhomopolymer und weniger als 10 Gew.-% Harz enthält und daß die Folie so verstreckt ist, daß das Produkt aus Reißfestigkeit in Längs- und Querrichtung größer 50 000 $(N/mm^2)^2$ und die Reißfestigkeit in Längsrichtung größer 170 $N/mm^2$ und in Querrichtung größer ist 290 $N/mm^2$ ist und die Reißfestigkeit nach DIN 53 455 bestimmt wird.

Erfindungsgemäß kann die Folie einschichtig sein und besteht dann nur aus der im folgenden beschriebenen Basisschicht. In einer bevorzugten Ausführungsform weist die Folie auf ihrer Basisschicht mindestens eine, gegebenenfalls beidseitig Deckschicht/en auf. In einer weiteren Ausführungsform weist die Folie auf ihrer Basisschicht mindestens eine, gegebenenfalls beidseitig Zwischenschicht/en auf.

Die Basisschicht der Folie enthält im allgemeinen mindestens 85 Gew.-%, vorzugsweise 90 bis 99 Gew.-%, insbesondere 95 bis 98 Gew.-%, jeweils bezogen auf die Basisschicht, eines nachstehend beschriebenen Propylenhomopolymeren und gegebenenfalls zugesetzte Additive in jeweils wirksamen Mengen.

Das Propylenhomopolymere der Basisschicht hat einen Schmelzpunkt von 140 bis 165 °C, vorzugsweise von 155 bis 162°C, und einen Schmelzflußindex (Messung DIN 53 735 bei 21,6 N Belastung und 230 C ) von 1,0 bis 10 g/10 min, vorzugsweise von 1,5 bis 6 g/10 min. Der n-heptanlösliche Anteil des Polymeren beträgt im allgemeinen 1 bis 10 Gew.-%, bezogen auf das Ausgangspolymere. Der n-heptanunlösliche Anteil des Propylenhomopolymeren ist isotaktisch. Der mittels $^{13}C$-NMR-Spektroskopie bestimmte Kettenisotaxie-Index des n-heptanunlöslichen Anteils des Homopolymeren beträgt 85 bis 94 %, vorzugsweise 90 bis 93 %.

Die Molekulargewichtsverteilung des Propylenhomopolymeren kann je nach Anwendungsgebiet in breiten Grenzen variieren. Das Verhältnis des Gewichtsmittels $M_w$ zum Zahlenmittel $M_n$ liegt im allgemeinen zwischen 2 und 15.

In einer bevorzugten Ausführungsform der erfindungsgemäßen Folie liegt das Verhältnis des Gewichtsmittels $M_w$ zum Zahlenmittel $M_n$ bei 2 bis 6, ganz besonders bevorzugt bei 3,5 bis 5. Eine derartig enge Molekulargewichtsverteilung des Propylenhomopolymeren der Basisschicht erreicht man beispielsweise durch dessen peroxidischen Abbau.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymeren vor dem Zusatz des organischen Peroxids

$MFI_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Erfindungsgemäß enthält die Basisschicht der Folie Harz in einer Menge von weniger als 10 Gew.-%, vorzugsweise 1 bis 8 Gew.-%, insbesondere 1 bis 5 Gew.-%, jeweils bezogen auf das Gewicht der Basisschicht.

Harze sind niedermolekulare Polymere, deren Molekulargewicht im allgemeinen in einem Bereich von 300 bis 8 000, vorzugsweise 400 bis 5 000, inbesondere 500 bis 2 000, liegt. Damit ist das Molekulargewicht des Harzes deutlich niedriger als das des Propylenpolymeren, welches im allgemeinen ein Molekulargewicht von über 100 000 hat. Der Erweichungspunkt des Harzes liegt zwischen 60 und 180 C (gemessen nach DIN 1995-U4, entspricht ASTME-28). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Als Harze sind insbesondere Kohlenwasserstoffharze, bevorzugt. Die Kohlenwasserstoffharze können teilweise oder vollständig hydriert sein. Als Harze kommen grundsätzlich synthetische Harze oder Harze natürlichen Ursprungs in Frage. Es hat sich als besonders vorteilhaft erwiesen, Harze mit einem Erweichungspunkt von ≥ 60°C (gemessen nach DIN 1995-U4 bzw. ASTM E-28) einzusetzen, wobei solche mit einem Erweichungspunkt von 70 bis 180°C, insbesondere 80 bis 160°C, bevorzugt sind.

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 60 °C eingesetzt (bei den ungesättigten Polymerisaten ist das hydrierte Produkt bevorzugt).

Darüber hinaus kann die Basisschicht zusätzlich übliche Additive wie Antistatika, Antiblockmittel, Gleitmittel, Stabilisatoren, Neutralisationsmittel und Pigmente in jeweils wirksamen Mengen sowie Folienregenerat enthalten.

Die nachstehenden Mengenangaben bezüglich der Additive beziehen sich immer auf das Gewicht der Gesamtfolie.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 $\mu$ m, insbesondere 2 und 5 $\mu$m, wobei Teilchen mit einer kugelförmigen Gestalt, wie in der EP-A-0 236 945 und der DE-A-38 01 535 beschrieben, besonders geeignet sind.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Ein insbesondere geeignetes aliphatisches Säureamid ist Erucasäureamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 $mm^2/s$.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als500 g/molbevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit, Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 $m^2/g$. Im allgemeinen wird das Neutralisationsmittel in einer Menge von 0,02 bis 0,1 Gew.-% zugesetzt.

Pigmente, welche in nicht transparenten Ausführungsformen enthalten sind, umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 $\mu$m gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 $\mu$m, vorzugsweise 0,01 bis 0,5 $\mu$m.

Übliche Pigmente sind Materialien wie z. B. Aluminiumoxid, Aluminiumsulfat, Bariumsulfat, Calciumcarbonat,

Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden.

Die Basisschicht enthält gegebenenfalls Pigmente im allgemeinen in einer Menge von 1 bis 25 Gew.-%, insbesondere 2 bis 20 Gew.-%, bevorzugt 5 bis 15 Gew.-%, jeweils bezogen auf die Basisschicht. Als Pigmente sind Weißpigmente, insbesondere $TiO_2$, Siliciumdioxid und $BaSO_4$ bevorzugt. Diese Pigmente haben bevorzugt einen mittleren Teilchendurchmesser von 0,01 bis 0,7 µm, insbesondere 0,01 bis 0,4 µm.

Weiterhin kann der Basisschicht sogenanntes Folienregenerat in einer Menge von bis zu 60 Gew.-%, vorzugsweise 1 bis 30 Gew.-%, zugesetzt werden. Folienregenerat ist beispielsweise Folienverschnitt, der beim Säumen der Randbereiche oder bei der Konfektionierung anfällt. Auf diese Weise enthält die Basisschicht der Folie eine geringfügige Menge des im Regenerat vorhandenen Deckschichtpolymeren, z. B. Propylenco- oder -terpolymer. Die Verarbeitung des Regenerats in dieser Weise bietet wirtschaftliche Vorteile.

Die erfindungsgemäße Polypropylenfolie umfaßt in einer bevorzugten Ausführungsform mindestens eine, gegebenenfalls beidseitig, siegelbare oder nicht siegelbare Deckschicht/en, welche im allgemeinen 75 bis 100 Gew.-%, vorzugsweise 90 bis 99,5 Gew.-%, jeweils bezogen auf das Gewicht der Deckschicht, Polymere aus $\alpha$-Olefinen mit 2 bis 10 Kohlenstoffatomen enthält/enthalten.

Beispiele für derartige $\alpha$-olefinische Polymere sind

ein Propylenhomopolymer oder
ein Copolymer von

Ethylen und Propylen oder
Ethylen und Butylen-1 oder
Propylen und Butylen-1 oder

ein Terpolymer von
Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit
einem Ethylengehalt von 1 bis 10 Gew.-%, bevorzugt 2,5 bis 8 Gew.-%, oder
statistische Propylen-Butylen-1-Copolymere mit
einem Butylengehalt von 2 bis 25 Gew.-%, bevorzugt 4 bis 20 Gew.-%,
jeweils bezogen auf das Gesamtgewicht des Copolymeren, oder statistische Ethylen-Propylen-Butylen-1-Terpolymere mit

einem Ethylengehalt von 1 bis 10 Gew. %, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butyien-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends, bevorzugt sind.

Das in der Deckschicht von nicht siegelbaren Ausführungsformen eingesetzte Propylenhomopolymere enthält zum überwiegenden Teil (mindestens 90 %) Propylen und besitzt einen Schmelzpunkt von 140 C oder höher, vorzugsweise 150 bis 170 C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere hat im allgemeinen einen Schmelzflußindex von 1,5 g/10 min bis 20 g/10 min, vorzugsweise 2,0 g/10 min bis 15 g/10 min.

Die in der Deckschicht von siegelfähigen Ausführungsformen eingesetzten vorstehend beschriebenen Copolymeren, Terpolymeren und Blends aus Co- und Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 150 C.

Der vorstehend angegebene Schmelzflußindex wird bei 230 C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein. Der Abbaufaktor für die Deckschichtpolymeren liegt im allgemeinen in einem Bereich von 3 bis 15, vorzugsweise 6 bis 10.

In einer matten Ausführungsform enthält die Deckschicht zusätzlich ein High Density Polyethylen (HDPE), welches mit den vorstehend beschriebenen Deckschichtpolymeren gemischt oder geblendet wird. Die Zusammensetzung und Einzelheiten der matten Deckschichten sind beispielsweise in der europäischen Patentanmeldung EP 0 622 185 beschrieben, auf die hier ausdrücklich Bezug genommen wird.

Gegebenenfalls können der/den Deckschicht/en die vorstehend für die Basisschicht beschriebenen Additive wie Antistatika, Antiblockmittel, Pigmente, Gleitmittel mittel, Neutralisationsmittel und Stabilisatoren zugesetzt werden. In einer bevorzugten Ausführungsform enthält/enthalten die Deckschicht/en eine Kombination von Antiblockmittel, vorzugsweise SiO2, und Gleitmittel, vorzugsweise Polydimethylsiloxan. Die vorstehenden Angaben in Gew.-% beziehen sich dann analog auf das Gewicht der Deckschicht.

Die erfindungsgemäße Folie umfaßt mindestens die vorstehend beschriebene Basisschicht, vorzugsweise mindestens eine Deckschicht. Je nach ihrem vorgesehenen Verwendungszweck kann die Folie eine weitere Deckschicht auf der gegenüberliegenden Seite aufweisen. Gegebenenfalls kann/können auch einseitig eine oder beidseitig Zwischenschicht/en zwischen der Basis- und der/den Deckschicht/en aufgebracht werden.

Bevorzugte Ausführungsformen der Polypropylenfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist größer als 0,1 µm und liegt vorzugsweise im Bereich von 0,2 bis 3 µm, insbesondere 0,3 bis 1,5 µm, wobei beidseitige Deckschichten gleich oder verschieden dick sein können.

Die Zwischenschicht/en kann/können aus den für die Deckschichten beschriebenen α-olefinischen Polymeren bestehen. In einer besonders bevorzugten Ausführungsform besteht/bestehen die Zwischenschicht/en aus dem für die Basisschicht beschriebenen Propylenhomopolymeren. Die Zwischenschicht/en kann/können die für die einzelnen Schichten beschriebenen üblichen Additive enthalten. Die Dicke der Zwischenschicht/en ist größer als 0,3 µm und liegt vorzugsweise im Bereich von 1,0 bis 15 µm, insbesondere 1,5 bis 10 µm.

Die Gesamtdicke der erfindungsgemäßen Polypropylenfolie kann innerhalb weiter Grenzen variieren und richtet sich nach dem beabsichtigten Einsatz. Sie beträgt vorzugsweise 4 bis 60 µm, insbesondere 5 bis 30 µm, vorzugsweise 6 bis 25 µm, wobei die Basisschicht etwa 40 bis 100 % der Gesamtfoliendicke ausmacht.

Die Erfindung betrifft weiterhin ein Verfahren zur Herstellung der erfindungsgemäßen Folie nach dem an sich bekannten Extrusionsverfahren. Im Rahmen dieses Verfahrens wird wie beim Extrusionsverfahren üblich das Polymere der Folie bzw. der einzelnen Schichten in einem Extruder komprimiert und verflüssigt, wobei die gegebenenfalls zugesetzten Additive bereits im Polymer bzw. in der Polymermischung enthalten sein können oder via Masterbatch-Technik zugegeben werden. Die der Folie bzw. den einzelnen Schichten der Folie entsprechende/n Schmelze/n wird/werden dann gleichzeitig durch eine Flachdüse (Breitschlitzdüse) extrudiert, und die ausgepreßte Folie wird auf einer oder mehreren Abzugswalzen abgezogen, wobei sie abkühlt und sich verfestigt.

Die so erhaltene Folie wird dann längs und anschließend quer zur Extrusionsrichtung gestreckt, was zu einer Orientierung der Molekülketten führt. Das Längsstrecken wird man zweckmäßigerweise mit Hilfe zweier entsprechend dem. angestrebten Streckverhältnis verschieden schnellaufender Walzen durchführen und das Querstrecken mit Hilfe eines entsprechenden Kluppenrahmens. Erfindungsgemäß wird die Folie mit einem im Vergleich zum Stand der Technik sehr hohen Verhältnis von 6:1 bis 9:1 in Längsrichtung gestreckt und mit einem Verhältnis von 7,5:1 bis 15:1 quergestreckt. Vorzugsweise wird die Folie in Längsrichtung in einem Bereich von 6,5:1 bis 8:1 und in Querrichtung in einem Bereich von 8:1 bis 13:1 gestreckt. Dabei müssen zur Erzielung der erfindungswesentlichen Eigenschaften die Längs- und Querstreckverhältnisse so ausgewählt werden, daß das Produkt aus Längsstreckverhältnis und Querstreckverhältnis (Flächenstreckverhältnis) bei ≥60, vorzugsweise im Bereich von 62 bis 100, insbesondere 65 bis 90, beträgt. Es hat sich gezeigt, daß sich diese hohen Flächenstreckverhältnisse von mindestens 60 überraschenderweise dann ohne Folienabrisse in der Querstreckung realisieren lassen, wenn der Basisschicht als Streckhilfe ein Harz in relativ geringer Menge zugesetzt wird. Im allgemeinen tendieren die Folien mit zunehmendem Grad der Längsverstreckung zu einer immer höheren Spleißneigung. Durch die Zugabe von Harz als Streckhilfe wird die Spleißneigung herabgesetzt.

Es hat sich überraschend gezeigt, daß durch den Zusatz von relativ geringen Harzmengen sowohl die Verstreckbarkeit in Längsrichtung wesentlich verbessert wird als auch die anschließende Querorientierung der hochgradig längsorientierten Folie problemlos möglich ist, so daß ein hohes Flächenstreckverhältnis von ≥60 ohne Folienabrisse realisierbar ist.

An die biaxiale Streckung der Folie schließt sich ihre Thermofixierung (Wärmebehandlung) an, wobei die

Folie etwa 0,5 bis 10 lang bei einer Temperatur von 60 bis 160 °C, vorzugsweise 90 bis 150 °C, gehalten wird. Anschließend wird die Folie in üblicher Weise mit einer Aufwickeleinrichtung aufgewickelt.

Es hat sich als günstig erwiesen, die Abzugswalze oder -walzen, durch die die ausgepreßte Folie auch abgekühlt und verfestigt wird, bei einer Temperatur von 20 bis 90 °C zu halten.

Die Temperaturen, bei denen Längs- und Querstreckung durchgeführt werden, können variieren. Im allgemeinen wird die Längsstreckung bei 80 bis 150 °C und die Querstreckung vorzugsweise bei 130 bis 180 °C durchgeführt. Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie zeichnet sich durch hervorragende mechanische Eigenschaften in Längs- und Querrichtung und eine ausgezeichnete Laufsicherheit während des Herstellungsprozesses aus.

Es wurde gefunden, daß zur Erreichung dieser ausgezeichneten mechanischen Eigenschaften keine apparativen Änderungen wie z. B. Nachlängsstreckung erforderlich sind. Die bekannten Copolymeren, die besser verstreckbar sind, weisen eine signifikant verschlechterte Transparenz auf. Darüber hinaus werden die mechanischen Eigenschaften der bekannten Copolymeren mit zunehmendem Ethylengehalt in Längs- und Querrichtung verschlechtert. Das bedeutet, daß für die größere Prozeßsicherheit (weniger Abrisse usw.) durch die verbesserte Streckbarkeit der Copolymeren eine Verschlechterung der mechanischen und optischen Eigenschaften der Folie in Kauf genommen werden muß. Kein Fachmann hätte erwartet, daß durch einen geringfügigen Harzzusatz die Streckbedingungen und das Flächenstreckverhältnis so geändert werden können, daß mit einem Propylenhomopolymeren, d. h. mit einem Standardrohstoff, wie er seit vielen Jahren für die Herstellung von oPP-Folien eingesetzt wird, derartig hochfeste Folien laufsicher und daher wirtschaftlich produziert werden können.

Weiterhin zeichnet sich die erfindungsgemäße Folie in überraschender Weise durch eine deutlich verbesserte Wasserdampf- und Sauerstoffbarriere gegenüber bekannten harzhaltigen Folien aus. Bisher wurden die verschiedensten Maßnahmen zur Verbesserung von Barriereeigenschaften beschrieben, aber noch niemals ein Zusammenhang zwischen den Barriereeigenschaften der Folie und ihrem Flächenstreckverhältnis. Überraschenderweise wurde eine synergistische Wirkung von Harzzusatz und erhöhtem Flächenstreckverhältnis auf die Barriereeigenschaften gefunden.

Die erfindungsgemäßen Folien zeichnen sich weiterhin durch eine sehr gute Foliensteifigkeit aus, so daß sie selbst mit einer Dicke von deutlich unter 20 µm noch ausreichend steif sind, um auf den modernen schnellaufenden Verpakkungsmaschinen verarbeitet zu werden. Mit dieser Folie ist es daher möglich, den Kunststoffanteil von Verpakkungen weiter zu senken, ohne daß Qualitätseinbußen der Verpackung auftreten. Auch haben überraschenderweise der Harzzusatz und das erhöhte Flächenstreckverhältnis eine synergistische Wirkung auf die mechanischen Eigenschaften der Folie.

Darüber hinaus zeigte sich, daß der Glanz und der Reibungskoeffizient der erfindungsgemäßen Folie durch die höhere Verstreckung ebenfalls verbessert wurden, d. h., daß die Folie bei gleicher Rohstoff- und Additivrezepturierung einen umso höheren Glanz und einen umso niedrigeren Reibungskoeffizienten aufweist je höher das Flächenstreckverhältnis ist. Der verbesserte Reibungskoeffizient ermöglicht eine Erniedrigung der einzusetzenden Gleitmittelmenge und damit einerseits Kostenersparnis und andererseits eine erniedrigte Globalmigration, die aus lebensmittelrechtlichen Gründen wünschenswert ist.

Die nachstehende Tabelle 1 faßt die wichtigsten Folieneigenschaften zusammen.

## TABELLE 1

| | erfindungsgemäßer Bereich | vorzugsweise | Einheit | Meßmethode |
|---|---|---|---|---|
| E-Modul in Längsrichtung | > 2 400 bis 3 500 | 2 500 bis 3 000 | $N/mm^2$ | DIN 53 457 bzw. ASTM 882 |
| E-Modul in Querrichtung | > 4 000 bis 6 000 | 4 200 bis 5 500 | $N/mm^2$ | DIN 53 457 bzw. ASTM 882 |
| Wasserdampfdurchlässigkeit | ≤ 24/Dicke in $\mu m$ | ≤ 23/Dicke in $\mu m$ | $g/m^2 \cdot d$ | DIN 53 122 Teil 2 |
| Reißfestigkeit, längs | ≥ 170 | ≥ 175 | $N/mm^2$ | DIN 53 455 |
| Reißfestigkeit, quer | ≥ 290 | ≥ 295 | $N/mm^2$ | DIN 53 455 |
| Glanz (Meßwinkel 20°) | ≥ 110 | ≥ 120 | | DIN 67 530 |
| Warmblockwerte | ≤ 10 | ≤ 5 | N | |
| Trübung | ≤ 2,5 | ≤ 2,3 | % | ASTM-D 1003-52 |
| Reibungskoeffizient | ≤ 0,3 | ≤ 0,27 | | DIN 53 375 |

Zur Charakterisierung der Rohstoffe und der Folien wurden die folgenden Meßmethoden benutzt:

Schmelzflußindex

Der Schmelzflußindex wurde nach DIN 53 735 bei 21,6 N Belastung und 230 °C gemessen.

Schmelzpunkt

DSC-Messung, Maximum der Schmelzkurve, Aufheizgeschwindigkeit 20 °C/min.

Wasserdampf- und Sauerstoffdurchlässigkeit

Die Wasserdampfdurchlässigkeit wird gemäß DIN 53 122 Teil 2 bestimmt. Die Bestimmung der Sauerstoffbarrierewirkung erfolgt gemäß Entwurf DIN 53 380 Teil 3 bei einer Luftfeuchte von 53 %.

Trübung

Die Trübung der Folie wurde nach ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Reibung

Die Reibung wurde nach DIN 53 375 frühestens nach 14 Tagen nach der Produktion gemessen.

Reißfestigkeit, Reißdehnung

Die Reißfestigkeit und die Reißdehnung werden nach DIN 53 455 bestimmt.

E-Modul

Der E-Modul wird gemäß DIN 53 457 bzw. ASTM 882 frühestens nach 14 Tagen nach der Produktion bestimmt.

Bestimmung des Warmblockverhaltens

Zur Messung des Warmblockverhaltens werden zwei einseitig filzbeklebte Holzklötzchen mit den Abmessungen 72 mm x 41 mm x 13 mm in die zu vermessende Folie eingeschlagen und gesiegelt. Auf die mit den Filzauflagen zueinandergekehrten Holzklötzchen wird ein Gewicht von 200 g plaziert und dieser Aufbau in einen auf 70 °C vortemperierten Wärmeofen gebracht und dort über 2 h belassen. Danach wird für 30 min auf Raumtemperatur (21 °C) abgekühlt, das Gewicht von den Holzklötzchen heruntergenommen und das obere Klötzchen mittels einer mechanischen Apparatur vom unteren Klötzchen heruntergezogen. Die Auswertung erfolgt über 4 Einzelmessungen, über die dann eine maximale Abschubkraft (gemessen in N) festgestellt wird. Die Spezifikation ist erfüllt, wenn keine der Einzelmessungen über 5 N liegt.

Molekulargewichtsbestimmung

Die mittlere Molmasse und die mittlere Molmassen-Dispersität wurden in Anlehnung an.DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (≈ 135 °C) durchgeführt.

Isotaktischer Anteil

Sowohl der isotaktische Anteil des Homopolymeren als auch der isotaktische Anteil der Folie können in Näherung durch die unlösliche Fraktion des Rohstoffes bzw. der Folie in einem geeigneten Lösungsmittel charakterisiert werden. Es hat sich als zweckmäßig erwiesen n-Heptan zu verwenden. Üblicherweise führt man eine Soxhlet-Extraktion mit siedendem n-Heptan durch. Zur Erzielung einer guten Reproduzierbarkeit ist es zweckmäßig, das Soxhlet anstelle von Granulat mit einem Preßling zu befüllen. Die Dicke des Preßlings sollte hierbei 500 Mikrometer nicht übersteigen. Für die quantitative Erfassung des ataktischen Anteils des Homopolymeren ist es von entscheidender Bedeutung, eine ausreichende Extraktionszeit sicherzustellen. In der Regel liegt die Extraktionszeit im Bereich von 8 bis 24 Stunden.

Die operationelle Definition des isotaktischen Anteils $PP_{iso}$ in Prozent ist gegeben durch das Verhältnis der Gewichte der getrockneten n-heptanunlöslichen Fraktion zur Einwaage:

$$PP_{iso} = 100x\ (\text{n-heptanunlösliche Fraktion/Einwaage})$$

Eine Analyse des getrockneten n-Heptan-Extraktes zeigt, daß dieser in der Regel nicht aus reinem ataktischen Propylenhomopolymeren besteht. Bei der Extraktion werden auch aliphatische und olefinische Oligomere, insbesondere isotaktische Oligomere sowie auch mögliche Zusatzstoffe wie z. B. hydrierte Kohlenwasserstoffharze, miterfaßt.

Kettenisotaxie-Index

Der oben definierte isotaktische Anteil $PP_{iso}$ ist für die Charakterisierung der Kettenisotaxie des Homopolymeren nicht ausreichend. Es erweist sich als sinnvoll, den Kettenisotaxie-Index II des Homopolymeren mittels hochauflösender $^{13}C$-NMR-Spektroskopie zu bestimmen, wobei als NMR-Probe nicht der Originalrohstoff, sondern dessen n-heptanunlösliche Fraktion zu wählen ist. Zur Charakterisierung der Isotaxie von Polymerketten benutzt man in der Praxis meist den $^{13}C$-NMR-spektroskopischen Triaden-Isotaxie-Index II (Triaden).

Bestimmung des triadenbezogenen Kettenisotaxie-Index II (Triaden)

Die Bestimmung des Kettenisotaxie-Index II (Triaden) des n-heptanunlöslichen Anteils des Homopolymeren sowie der Folie wird aus dessen bzw. deren $^{13}C$-NMR-Spektrum bestimmt. Man vergleicht die Intensitäten von Triaden-Signalen, welche aus den Methylgruppen mit unterschiedlichen lokalen Umgebungen resultieren.

Hinsichtlich der Auswertung des $^{13}C$-NMR-Spektrums sind zwei Fälle zu unterscheiden:

A) Der untersuchte Rohstoff ist ein Propylenhomopolymer ohne statistischen $C_2$-Gehalt.

B) Der untersuchte Rohstoff ist ein Propylenhomopolymer mit einem geringen statistischen $C_2$-Gehalt, im folgenden $C_2$-$C_3$-Copolymer genannt.

**Fall A:**

Der Kettenisotaxie-Index des Homopolymeren wird aus dessen $^{13}C$-NMR-Spektrum bestimmt. Man vergleicht die Intensitäten von Signalen, welche aus den Methylgruppen mit unterschiedlicher Umgebung resultieren. Im $^{13}C$-NMR-Spektrum eines Homopolymeren treten im wesentlichen drei Gruppen von Signalen, sogenannte Triaden, auf.

1. Bei einer chemischen Verschiebung von etwa 21 bis 22 ppm tritt die "mm-Triade" auf, welche den Methylgruppen mit links und rechts unmittelbar benachbarten Methylgruppen zugeordnet wird.

2. Bei einer chemischen Verschiebung von etwa 20,2 bis 21 ppm tritt die "mrTriade" auf, welche den Methylgruppen mit links oder rechts unmittelbar benachbarten Methylgruppen zugeordnet wird.

3. Bei einer chemischen Verschiebung von etwa 19,3 bis 20 ppm tritt die "rr-Triade" auf, welche den Methylgruppen ohne unmittelbar benachbarte Methylgruppen zugeordnet wird.

Die Intensitäten der zugeordneten Signalgruppen werden als Integral der Signale bestimmt. Der Kettenisotaxie-Index ist wie folgt definiert:

$$II\ (Triaden) = \frac{J_{mm} + 0{,}5\ J_{mr}}{J_{mm} + J_{mr} + J_{rr}} \cdot 100$$

worin $J_{mm}$, $J_{mr}$ und $J_{rr}$ die Integrale der zugeordneten Signalgruppen bedeuten.

Fall B:

Das $^{13}$C-NMR Spektrums von einem Ethylen-Propylen-Copolmeren: Die chemische Verschiebung der interessierenden Methylgruppen liegt im Bereich 19 bis 22 ppm. Das Spektrum der Methylgruppe Kann in drei Blöcke unterteilt werden. In diesen Blöcken erscheinen die $CH_3$-Gruppen in triadischen Sequenzen, deren Zuordnung zu den lokalen Umgebungen im folgenden näher erläutert wird:

**Block 1:**

$CH_3$-Gruppen in der PPP-Sequenz (mm-Triade)

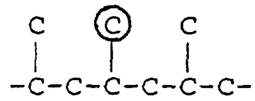

**Block 2:**

$CH_3$-Gruppen in der PPP-Sequenz (mr- oder rm-Triaden)

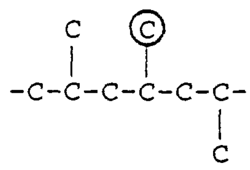

und $CH_3$-Gruppen in der EPP-Sequenz (m-Kette):

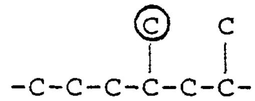

**Block 3**

$CH_3$-Gruppen in der PPP-Sequenz (rr-Triaden):

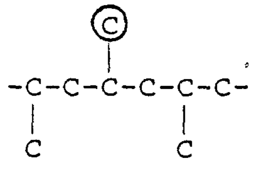

$CH_3$-Gruppen in einer EPP-Sequenz (r-Kette):

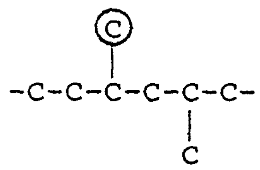

$CH_3$-Gruppen in einer EPE-Sequenz:

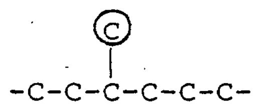

Bei der Bestimmung des triadenbezogenen Kettenisotaxie-Index II (Triaden) des n-heptanunlöslichen Anteils eines Ethylen-Propylen-Copolymers werden nur PPP-Triaden in Betracht gezogen, d. h. nur solche Propylen-Einheiten, die zwischen zwei benachbarten Propylen-Einheiten liegen (siehe auch EP-B-0 115 940, Seite 3, Zeilen 48 und 49).

Die Definition des Triaden-Isotaxie-Index' eines Ethylen-Propylen-Copolymeren lautet:

$$II\ (Triaden) = 100x(J_{mm}/J_{ppp})$$

Berechnung des Kettenisotaxie-Index eines Ethylen-Propylen-Copolymers:

1. $J_{mm}$ ist gegeben durch das Peakintegral von Block 1.

2. Berechne das Integral ($J_{gesamt}$) aller Methylgruppenpeaks in den Blöcken 1, 2 und 3.

3. Durch einfache Betrachtungen läßt sich zeigen, daß $J_{ppp}=J_{gesamt}-J_{EPP}-J_{EPE}$.

Probenvorbereitung und Messung:

60 bis 100 mg Polypropylen werden in 10 mm-NMR-Röhrchen eingewogen und Hexachlorbutadien und Tetrachlorethan in einem Mischungsverhältnis von etwa 1,5:1 zugegeben, bis eine Füllhöhe von ca. 45 mm erreicht ist. Die Suspension wird so lange (in der Regel ca. eine Stunde) bei ca. 140 °C aufbewahrt, bis eine homogene Lösung entstanden ist. Um den Lösevorgang zu beschleunigen, wird die Probe von Zeit zu Zeit mit einem Glasstab gerührt.

Die Aufnahme des $^{13}C$-NMR-Spektrums erfolgt bei erhöhter Temperatur (in der Regel 365 K) unter Standardmeßbedingungen (halbquantitativ).

**Beispiel 1**

Es wurde durch Coextrusion und anschließende stufenweise Orientierung in Längs- und Querrichtung eine transparente dreischichtige Folie mit symmetrischem Aufbau mit einer Gesamtdicke von 16 µm hergestellt. Die Deckschichten hatten eine Dicke von jeweils 0,6 µm.

A-Basisschicht:

| | |
|---|---|
| 96,85 Gew.-% | isotaktisches Polypropylen der Firma Hoechst AG mit dem Markennamen ® Hostalen PPR 1060 F |
| 0,15 Gew.-% | N,N-bis-ethoxyalkylamin |
| 3 Gew.-% | Kohlenwasserstoffharz ®ECR 356 der Firma Exxon |

Der n-heptanunlösliche Anteil der Folie hatte einen mittels $^{13}C$-NMR-Spektroskopie gemessenen Kettenisotaxie-Index von 92 %.

B-Deckschichten:

| | |
|---|---|
| 50 Gew.-% | eines statistischen Ethylen-Propylen-Butylen-Terpolymeren mit einem $C_2$-Gehalt von 3 Gew.-% und einem $C_4$-Gehalt von 10 Gew.-% |
| 48,87 Gew.-% | statistisches Ethylen-Propylen-Copolymeres mit einem $C_2$-Gehalt von 4,5 Gew.-% |
| 0,33 Gew.-% | $SiO_2$ als Antiblockmittel mit einer mittleren Teilchengröße von 2 µm |
| 0,80 Gew.-% | Polydimethylsiloxan mit einer Viskosität von 30 000 $mm^2/s$ |

Die Herstellungsbedingungen in den einzelnen Verfahrensschritten waren:

| | | | |
|---|---|---|---|
| Extrusion | Temperaturen | A-Schicht | 280 °C |
| | | B-Schichten | 280 °C |
| | Temperatur der Abzugswalze | | 30 °C |
| Längsstreckung | Temperatur | | 115 °C |
| | Längsstreckverhältnis | | 6,5 |
| Querstreckung | Temperatur | | 160 °C |
| | Querstreckverhältnis | | 10,8 |
| Fixierung | Temperatur | | 110 °C |
| | Konvergenz | | 15% |

Bei dem Querstreckverhältnis $\lambda_Q$ = 10,8 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

| | | |
|---|---|---|
| Zahlenangaben | Endfolienbreite | B = 4 960 mm |
| | Endfoliendicke | d = 16 µm |
| | Säumstreifenbreite | b = 40 mm |
| | Breite der längsgestreckten Folie | C = 530 mm |

**Beispiel 2**

Wie in Beispiel 1 wurde eine dreischichtige Folie mit einer Gesamtdicke von 16 µm und mit Deckschichtdicken von jeweils 0,6 µm hergestellt. Die Rohstoffzusammensetzung für die Basisschicht und für die Deckschichten ist ebenfalls die gleiche wie in Beispiel 1. Geändert wurden lediglich die Bedingungen in der Längs- und Querstreckung:

| | | |
|---|---|---|
| Längsstreckung | Temperatur | 115 °C |
| | Längsstreckverhältnis | 7,5 |
| Querstreckung | Temperatur | 160 °C |
| | Querstreckverhältnis | 10,8 |

**Beispiel 3**

Im Vergleich zu Beispiel 1 wurde der Harzgehalt der Basisschicht von 3 auf 5 Gew.-% erhöht.

**Beispiel 4**

Beispiel 3 wurde wiederholt. Im Vergleich zu Beispiel 3 wurde das Längsstreckverhältnis von 6,5 auf 7,5 erhöht.

**Vergleichsbeispiel 1**

Es wurde Beispiel 1 wiederholt, wobei jedoch Vefahrensbedingungen nach dem Stand der Technik gewählt wurden:
Die Herstellungsbedingungen in den einzelnen Verfahrensschritten waren:

| | | | |
|---|---|---|---|
| Extrusion | Temperaturen | A-Schicht | 280 °C |
| | | B-Schichten | 280 °C |
| | Temperatur der Abzugswalze | | 30 °C |
| Längsstreckung | Temperatur | | 115 °C |
| | Längsstreckverhältnis | | 5,0 |
| Querstreckung | Temperatur | | 160 °C |
| | Querstreckverhältnis | | 10,8 |
| Fixierung | Temperatur | | 110 °C |
| | Konvergenz | | 20 % |

**Vergleichsbeispiel 2**

Es wurde Beispiel 1 wiederholt. Die Folie enthielt jedoch kein Kohlenwasserstoffharz. Es kam infolge von häufigen Abrissen in der Längs- und Querstreckung kein Folienlauf zustande.

**Vergleichsbeispiel 3**

Vergleichsbeispiel 1 wurde wiederholt. Die Basisschicht enthielt jedoch kein Kohlenwasserstoffharz.

## TABELLE 2

| | Folien-dicke<br>µm | Harzanteil | Flächenstreck-verhältnis | E-Modul<br>DIN 53 457<br>längs/quer<br>$N/mm^2$ | Reißfestigkeit<br>DIN 53 455<br>längs/quer<br>$N/mm^2$ | Glanz<br>DIN 67 530<br>(Meßwinkel 20°) | Wasserdampf-durchlässigkeit<br>DIN 53 122<br>$g/m^2 \cdot d$ | Trübung<br>ASTM D 1003-52<br>% | Reibung<br>14 Tage nach Produktion<br>A-Seite/D-Seite | Warmblock-verhalten<br>N |
|---|---|---|---|---|---|---|---|---|---|---|
| B1 | 16 | 3 | 70 | 2 600/4 800 | 180/310 | 130 | 1,3 | 1,8 | 0,22/0,23 | 1,5 |
| B2 | 16 | 3 | 81 | 2 800/4 950 | 205/320 | 135 | 1,15 | 1,7 | 0,21/0,21 | 1,5 |
| B3 | 16 | 5 | 70 | 2 700/4 850 | 185/315 | 130 | 1,2 | 1,8 | 0,24/0,25 | 2,0 |
| B4 | 16 | 5 | 81 | 2 950/5 030 | 210/320 | 133 | 1,05 | 1,6 | 0,23/0,23 | 2,0 |
| VB1 | 16 | 3 | 54 | 2 200/4 800 | 140/300 | 110 | 1,45 | 2,1 | 0,25/0,26 | 1,8 |
| VB2 | 16 | 0 | 70 | kein Folienlauf | | | | | | |
| VB3 | 16 | 0 | 54 | 2 200/4 200 | 130/300 | 100 | 1,75 | 2,2 | 0,26/0,27 | 1,5 |

B = Beispiel; VB = Vergleichsbeispiel

## Patentansprüche

1. Biaxial orientierte Polypropylenfolie, welche Harz enthält, dadurch gekennzeichnet, daß der n-heptanunlösliche Anteil der Folie einen Kettenisotaxie-Index, gemessen mittels $^{13}C$-NMR-Spektroskopie, von mindestens 85 bis 94 % aufweist, daß die Basisschicht Propylenhomopolymer und weniger als 10 Gew.-% Harz enthält und daß die Folie so verstreckt ist, daß das Produkt aus Reißfestigkeit in Längs- und Querrichtung größer 50 000 $(N/mm^2)^2$ und die Reißfestigkeit in Längsrichtung größer 170 $N/mm^2$ und in Querrichtung größer 290 $N/mm^2$ ist und die Reißfestigkeit nach DIN 53 455 bestimmt wird

2. Polypropylenfolie gemäß Anspruch 1, dadurch gekennzeichnet, daß das Produkt aus dem Elastizitätsmodul nach DIN 53 457 der Folie in Längsrichtung und dem Elastizitätsmodul der Folie in Querrichtung größer $9 \cdot 10^6$ $(N/mm^2)^2$ ist.

3. Polypropylenfolie gemäß einem der Ansprüche 1 und/oder 2 dadurch gekennzeichnet, daß die Wasserdampfdurchlässigkeit nach DIN 53 122 ≤24/Dicke in µm [$g/m^2 \cdot d$] ist.

4. Polypropylenfolie gemäß einem oder mehreren der Ansprüche 1 bis 3, dadurch gekennzeichnet, daß der Glanz nach DIN 67 530 der Folie ≥110 und die Trübung bestimmt in Anlehnung ASTM-D 1003-52 ≤2,5 % beträgt.

5. Polypropylenfolie gemäß einem oder mehreren der Ansprüche 1 bis 4, dadurch gekennzeichnet, daß die Folie in Längsrichtung in einem Bereich von 6:1 bis 9:1 und in Querrichtung in einem Bereich von 7,5:1 bis 15:1 gestreckt wurde, wobei das Produkt aus Längsstreckverhältnis und Querstreckverhältnis ≥ 60 ist.

6. Polypropylenfolie gemäß einem oder mehreren der Ansprüche 1 bis 5, dadurch gekennzeichnet, daß die Folie nur aus der Basisschicht besteht.

7. Verfahren zur Herstellung einer Polypropylenfolie nach Anspruch 1, bei welchem das/die Polymere/n in einem Extruder komprimiert und geschmolzen wird/werden, die Schmelze/n durch eine Flachdüse extrudiert und auf mindestens einer Abzugswalze abgezogen wird/werden, wobei sich die Schmelze/n wieder verfestigt/verfestigen, und die so erhaltene Vorfolie in Längs- und Querrichtung orientiert wird, dadurch gekennzeichnet, daß die Orientierung in Längs- und Querrichtung so erfolgt, daß das Produkt aus dem Längsstreckverhältnis und dem Querstreckverhältnis ≥ 60 beträgt.

8. Verfahren gemäß Anspruch 7, dadurch gekennzeichnet, daß die Folie in Längsrichtung in einem Verhältnis von 6:1 bis 9:1, vorzugsweise 6,5:1 bis 8:1, und in Querrichtung in einem Verhältnis von 7,5:1 bis 15:1, vorzugsweise 8:1 bis 13:1, orientiert wird.

## Claims

1. Biaxially oriented polypropylene film comprising resin, characterised in that the n-heptane-insoluble fraction of the film has a chain isotactic index, measured by means of $^{13}C$-NMR spectroscopy, of at least 85 to 94 %; the base layer comprises propylene homopolymer and less than 10 % resin by weight; and the film is so stretched that the product of tensile strength at break in the longitudinal and transverse direction is greater than 50,000 $(N/mm^2)^2$ and the tensile strength at break is greater than 170 $N/mm^2$ in the longitudinal direction and greater than 290 $N/mm^2$ in the transverse direction and the tensile strength at break is determined in accordance with DIN 53 455.

2. Polypropylene film according to claim 1, characterised in that the product of the modulus of elasticity according to DIN 53 457 of the film in the longitudinal direction and the modulus of elasticity of the film in the transverse direction is greater than $9.10^6$ $(N/mm^2)^2$.

3. Polypropylene film according to any of claims 1 and/or 2, characterised in that the water vapour permeability according to DIN 53 122 is ≤ 24/thickness in µm [$g/m^2.d$].

4. Polypropylene film according to one or more of claims 1 to 3, characterised in that the gloss according to DIN 67 530 of the film is ≥ 110 and the opacity, determined by analogy with ASTM-D 1003-52, is ≤ 2.5.%

5. Polypropylene film according to one or more of claims 1 to 4, characterised in that the film has been stretched in

a range of from 6:1 to 9:1 in the longitudinal direction and in a range of from 7.5:1 to 15:1 in the transverse direction, the product of the longitudinal stretching ratio and the transverse stretching ratio being ≥ 60.

**6.** Polypropylene film according to one or more of claims 1 to 5, characterised in that the film consists of only the base layer.

**7.** Process for the production of a polypropylene film according to claim 1, wherein the polymer(s) is/are compressed and melted in an extruder, the melt(s) is/are extruded through a slot die and is/are drawn off on a draw-off roll, during which the melt(s) re-solidifies/re-solidify, and the resulting prefilm is oriented in the longitudinal and transverse direction, characterised in that orientation in the longitudinal and transverse direction is so effected that the product of the longitudinal stretching ratio and the transverse stretching ratio is ≥ 60.

**8.** Process according to claim 7, characterised in that the film is oriented in the longitudinal direction in a ratio of from 6:1 to 9:1, preferably from 6.5:1 to 8:1, and in the transverse direction in a ratio of from 7.5:1 to 15:1, preferably from 8:1 to 13:1.

**Revendications**

**1.** Feuille en polypropylène soumise à une orientation biaxe, qui contient de la résine, caractérisée en ce que la fraction de la feuille insoluble dans du n-heptane présente un indice d'isotaxie de la chaîne, mesuré par spectroscopie $^{13}$C-RMN, d'au moins 85 à 94 %, en ce que la couche de base contient un homopolymère de propylène et de la résine à raison de moins de 10 % en poids, et en ce que la feuille est soumise à un étirage tel que le produit de la résistance au déchirement dans la direction longitudinale et dans la direction transversale est supérieur à 50.000 $(N/mm^2)^2$ dans la direction longitudinale, la résistance au déchirement dans la direction longitudinale étant supérieure à 170 $N/mm^2$, la résistance au déchirement dans la direction transversale étant supérieure à 290 $N/mm^2$ et la résistance au déchirement étant déterminée conformément à la norme DIN 53 455.

**2.** Feuille en polypropylène selon la revendication 1, caractérisé en ce que le produit du module d'élasticité selon la norme DIN 53 457 de la feuille en direction longitudinale et du module d'élasticité de la feuille en direction transversale est supérieur à $9.10^6$ $(N/mm^2)^2$.

**3.** Feuille en polypropylène selon une des revendications 1 et/ou 2, caractérisé en ce que la perméabilité à la vapeur d'eau selon la norme DIN 53 122 est ≤ 24/épaisseur en µm [g/m$^2$.d].

**4.** Feuille en polypropylène selon une ou plusieurs des revendications 1 à 3, caractérisée en ce que le brillant selon la norme DIN 67 530 de la feuille est ≥ 110 et le voile déterminé conformément à la norme ASTM-D 1003-52 est ≤ 2,5.%

**5.** Feuille en polypropylène selon une ou plusieurs des revendications 1 à 4, caractérisée en ce que la feuille a été soumise à un étirage en direction longitudinale dans le domaine de 6:1 à 9:1 et à un étirage en direction transversale dans le domaine de 7,5:1 à 15:1, le produit de l'étirage en direction longitudinale et de l'étirage en direction transversale étant égal à ≥ 60.

**6.** Feuille en polypropylène selon une ou plusieurs des revendications 1 à 4, caractérisée en ce que la feuille est constituée d'une seule couche de base.

**7.** Procédé pour la fabrication d'une feuille en polypropylène selon la revendication 1, dans lequel on comprime le ou les polymères dans une extrudeuse et on le ou les porte à fusion, on extrude la ou les masses fondues à travers une filière pour feuilles et on les tend sur au moins un rouleau tendeur, si bien que la ou les masses fondues se solidifient à nouveau, et on soumet la feuille préalable ainsi obtenue à un étirage en direction longitudinale et à un étirage en direction transversale, caractérisé en ce que l'orientation en direction longitudinale et en direction transversale a lieu de telle sorte que le produit de l'étirage en direction longitudinale et de l'étirage en direction transversale s'élève à ≥ 60.

**8.** Procédé selon la revendication 7, caractérisé en ce qu'on soumet la feuille à une orientation en direction longitudinale dans un rapport de 6:1 à 9:1, de préférence de 6,5:1 à 8:1 et en direction transversale dans un rapport de 7,5:1 à 15:1, de préférence de 8:1 à 13:1.